# DEMANDE DE BREVET EUROPEEN

(11) **EP 1 326 401 A1**
(43) Date de publication de la demande: **09.07.2003**
(21) Numéro de dépôt: 02293058.0
(22) Date de dépôt: 11.12.2002
(51) Int. Cl.: H04L 29/06, G06F 1/00

(54) **Procédé de contrôle d'accès à un contenu et système pour le contrôle d'accès à un contenu**

(30) Priorité: 20.12.2001 FR 0116589
(71) Demandeur: Volubill, 38330 Montbonnot Saint-Martin (FR)
(72) Inventeur: Bouthors, Nicolas, 38240 Meylan (FR)
(74) Mandataire: Debay, Yves

(57) **Abrégé**

La présente invention concerne un procédé de contrôle d'accès à un contenu, d'un utilisateur d'un terminal (3) connecté à travers un réseau (7) informatique à au moins un serveur d'un fournisseur (1) de contenus, ce procédé étant caractérisé en ce qu'il comprend une étape d'échange interactif de données à travers un réseau (6) de communication sans-fil entre un organisme de confiance (4) du réseau (7) informatique, déterminé ou accepté par l'utilisateur, et un terminal mobile (5) accessible à l'utilisateur. L'invention concerne également un système pour le contrôle d'accès à un contenu.

## Description

La présente invention concerne un procédé de contrôle d'accès à un contenu d'un fournisseur de contenus et un système pour le contrôle d'accès à un contenu d'un fournisseur de contenus.

Dans l'art antérieur, il est connu de centraliser les procédures de contrôle d'accès à plusieurs sites Internet distincts en utilisant un service Internet spécifique. Un utilisateur effectue alors une seule procédure de contrôle d'accès (Single Sign In, ou SSI) auprès de ce service spécifique pour accéder aux contenus sécurisés des sites qui sont référencés auprès de ce service spécifique et pour lesquels il est inscrit. Lorsque l'utilisateur souhaite accéder à un contenu sécurisé d'un site Internet référencé, pour lequel il est inscrit, il est renvoyé sur le service spécifique pour effectuer la procédure de contrôle d'accès. Une fois cette procédure effectuée, l'utilisateur pourra naviguer sans avoir à s'identifier sur tous les autres sites référencés pour lesquels il est inscrit.

Le service "Microsoft Passport" (marque déposée) propose aux sites d'être référencés auprès de lui et d'effectuer pour eux leur procédure de contrôle d'accès. Les données d'identification de l'utilisateur sont alors stockées uniquement sur un serveur de "Microsoft Passport". Ce type de service permet donc aux sites référencés de ne pas avoir à gérer eux-mêmes la procédure de contrôle d'accès et le stockage des données d'identification.

Toutefois, même en utilisant une procédure centralisée sécurisée, les données d'identification de l'utilisateur transitent sur le réseau Internet entre le terminal de l'utilisateur et le serveur du service central de contrôle d'accès. Or la circulation des données sur le réseau Internet est connue pour ne pas être parfaitement sécurisée ce qui peut présenter un inconvénient lorsque l'utilisateur doit accéder par exemple à des informations strictement confidentielles telles que ses comptes bancaires.

Il est connu dans l'art antérieur d'authentifier l'utilisateur en envoyant un message SMS sur son téléphone mobile ce message lui demandant d'envoyer un mot de passe ou un accusé de réception. La réponse envoyée par l'utilisateur depuis son téléphone mobile est ensuite traitée par le service central de contrôle d'accès du réseau informatique. Le mot de passe de l'utilisateur ne transite donc pas sur le réseau Internet ce qui rend la procédure de contrôle d'accès relativement sûre.

Toutefois, dans cet art antérieur, le service central de contrôle d'accès est imposé à l'utilisateur par le site disposant du contenu auquel l'utilisateur souhaite accéder. L'utilisateur ne dispose donc d'aucune assurance sur la qualité et la provenance de ce service central et également sur l'échange de données effectué entre le service central et son téléphone mobile. En particulier, la facturation des messages envoyés entre l'utilisateur et le service central de contrôle d'accès doit être parfaitement transparente. L'utilisateur, s'il doit payer, doit pouvoir communiquer sans risque ses coordonnées bancaires au service central. Or, comme déjà écrit ci-dessus, le service central de contrôle d'accès peut être inconnu de l'utilisateur, par conséquent l'échange de données entre l'utilisateur depuis son terminal ou son terminal mobile reste non sûr.

Le but de l'invention est de pallier un ou plusieurs inconvénients de l'art antérieur en proposant un procédé de contrôle d'accès à un contenu par un utilisateur, depuis son terminal, qui soit parfaitement sûr et transparent notamment en ce qui concerne des transactions de contenu impliquant de la facturation.

Ce but est atteint par un procédé de contrôle d'accès à un contenu, d'un utilisateur d'un terminal connecté à travers un réseau informatique à au moins un serveur d'un fournisseur de contenus, ce procédé étant caractérisé en ce qu'il comprend une étape d'échange interactif de données à travers un réseau de communication sans-fil entre un organisme de confiance du réseau informatique, déterminé ou accepté par l'utilisateur, et un terminal mobile (5) accessible à l'utilisateur.

Selon une autre particularité, l'étape d'échange de données comporte une étape d'envoi vers le terminal mobile, par l'organisme de confiance, d'une requête demandant à l'utilisateur de confirmer ou d'envoyer des données d'authentification depuis le terminal mobile.

Selon une autre particularité, le procédé comprend une étape de contrôle de la disponibilité du terminal mobile et une étape de détermination de la norme de communication suivie par le terminal mobile.

Selon une autre particularité, le procédé comprend une étape de détermination, par un agent serveur du réseau informatique, référencé comme de confiance pour le fournisseur de contenu, ou par le fournisseur de contenu lui-même, de données d'identification relatives à l'utilisateur soit par lecture d'au moins une base de données soit par envoi sur le terminal de l'utilisateur d'une demande de définition de ces données d'identification.

Selon une autre particularité, le procédé comprend une étape d'envoi à l'organisme de confiance, par l'agent serveur ou par le fournisseur de contenu, d'une requête comportant des données d'identification de l'utilisateur.

Selon une autre particularité, le procédé comprend une étape de cryptage des données d'identification à envoyer à l'organisme de confiance.

Selon une autre particularité, le procédé comprend une étape de vérification par l'organisme de confiance de la provenance de la requête.

Selon une autre particularité, le procédé comprend une étape d'envoi, de l'organisme de confiance à l'agent serveur ou au fournisseur de contenus, d'une réponse déterminée comprenant notamment un niveau de sécurité atteint ou pouvant être atteint lors d'une procédure de contrôle d'accès respectivement effectuée ou à effectuer.

Selon une autre particularité, le procédé comprend une étape de réaction de l'agent serveur ou du fournisseur de contenus en fonction de la réponse envoyée par l'organisme de confiance, cette réaction comprenant la mise en place d'actions de remplacement si le niveau de sécurité souhaité par l'utilisateur pour l'accès au contenu n'a pas été ou ne peut être atteint.

Selon une autre particularité, le procédé comprend une étape d'envoi à l'organisme de confiance, par l'agent serveur ou le fournisseur de contenus, de données représentatives d'un niveau de sécurité souhaité par l'utilisateur pour l'accès au contenu et une étape de mise en place de la procédure de contrôle d'accès définie pour ce niveau de sécurité.

Selon une autre particularité, les données d'identification, comprenant le nom et l'adresse de l'organisme de confiance, un identifiant de l'utilisateur auprès de l'organisme de confiance, le niveau de sécurité souhaité par l'utilisateur pour le contenu à accéder ainsi que les actions de remplacement à mettre en oeuvre, sont saisis préalablement par l'utilisateur sur au moins une feuille gérée par l'agent serveur ou le fournisseur de contenus.

Selon une autre particularité, le procédé comprend une étape de commande de la fin de la session d'accès au contenu souhaité mise en oeuvre depuis le terminal mobile.

Selon une autre particularité, la communication entre l'organisme de confiance et le terminal mobile est réalisée à travers un réseau de radiotéléphonie.

Selon une autre particularité, le réseau de radiotéléphonie fonctionne suivant la norme WAP, GPRS ou UMTS.

Un autre but de l'invention est de proposer un système pouvant mettre en oeuvre le procédé décrit ci-dessus.

Ce but est atteint par un système pour le contrôle d'accès à un contenu, d'un utilisateur d'un terminal connecté à travers un réseau informatique à au moins un serveur d'un fournisseur de contenus, ce système étant caractérisé en ce qu'il comprend des moyens d'échange interactif de données à travers un réseau de communication sans-fil entre un organisme de confiance du réseau informatique, déterminé ou accepté par l'utilisateur, et un terminal mobile accessible à l'utilisateur.

Selon une autre particularité, les moyens d'échange de données comprennent des moyens d'envoi sécurisé par l'organisme de confiance vers le terminal mobile d'au moins une requête demandant à l'utilisateur de confirmer des données d'authentification ou d'envoyer des données d'authentification depuis le terminal mobile.

Selon une autre particularité, le système comprend des moyens de mémorisation mémorisant des données d'identification relatives à l'utilisateur dans au moins une base de données localisée sur un agent serveur du réseau informatique, référencé comme de confiance pour le fournisseur de contenus, ou sur le fournisseur de contenus.

Selon une autre particularité, ces données d'identification comprennent notamment le nom et l'adresse de l'organisme de confiance de l'utilisateur ainsi qu'un identifiant de l'utilisateur auprès de l'organisme de confiance.

Selon une autre particularité, les moyens de mémorisation mémorisent dans au moins une base de données, des données représentatives d'un niveau de sécurité défini par l'utilisateur pour l'accession au contenu et des actions de remplacement à mettre en oeuvre si ce niveau n'est pas atteint ou ne peut être atteint.

Selon une autre particularité, ces actions de remplacement sont l'accès à une partie du contenu uniquement, l'accès au contenu ou à une partie de celui-ci en mode lecture uniquement ou l'envoi d'un message au terminal mobile par l'organisme de confiance.

Selon une autre particularité, l'organisme de confiance comprend des moyens de contrôle de la disponibilité du terminal mobile de l'utilisateur et de la norme de communication suivie par le téléphone mobile.

Selon une autre particularité, le système comprend des moyens d'activation d'actions de remplacement représentant une procédure d'authentification d'un niveau de sécurité inférieur si le terminal mobile n'est pas disponible et/ou ne fonctionne pas suivant une norme appropriée.

Selon une autre particularité, l'organisme de confiance comprend des moyens de génération et d'envoi d'une réponse à l'agent serveur ou au fournisseur (1) de contenus, cette réponse comportant des données représentatives du niveau de sécurité atteint ou pouvant être atteint.

Selon une autre particularité, l'agent serveur ou le fournisseur de contenus comprend des moyens de traitement de la réponse reçue de l'organisme de confiance ainsi que des moyens d'activation d'une ou plusieurs actions de remplacement si le niveau de sécurité souhaité n'a pas été atteint ou ne peut être atteint.

Selon une autre particularité, l'agent serveur ou le fournisseur de contenu comporte des moyens de lecture de la ou des bases de données pour déterminer les données d'identification relatives à l'utilisateur et les actions de remplacement lorsque le niveau de sécurité n'est pas atteint.

Selon une autre particularité, le système comprend des moyens de saisie par l'utilisateur, sur au moins une feuille gérée par l'agent serveur ou par le fournisseur de contenus, des données d'identification de l'utilisateur, du niveau de sécurité souhaité par l'utilisateur ainsi que des actions de remplacement à mettre en oeuvre si ce niveau n'est pas atteint.

Selon une autre particularité, le réseau de communication entre l'organisme de confiance et le terminal mobile est un réseau de radiotéléphonie.

Selon une autre particularité, le réseau de radiotéléphonie fonctionne suivant la norme WAP, GPRS ou UMTS.

L'invention, avec ses caractéristiques et avantages, ressortira plus clairement à la lecture de la description faite en référence aux dessins annexés dans lesquels :
- la figure 1 représente schématiquement l'architecture générale du système selon un mode de réalisation de l'invention ;
- la figure 2 représente schématiquement l'architecture générale du système selon un autre mode de réalisation de l'invention.

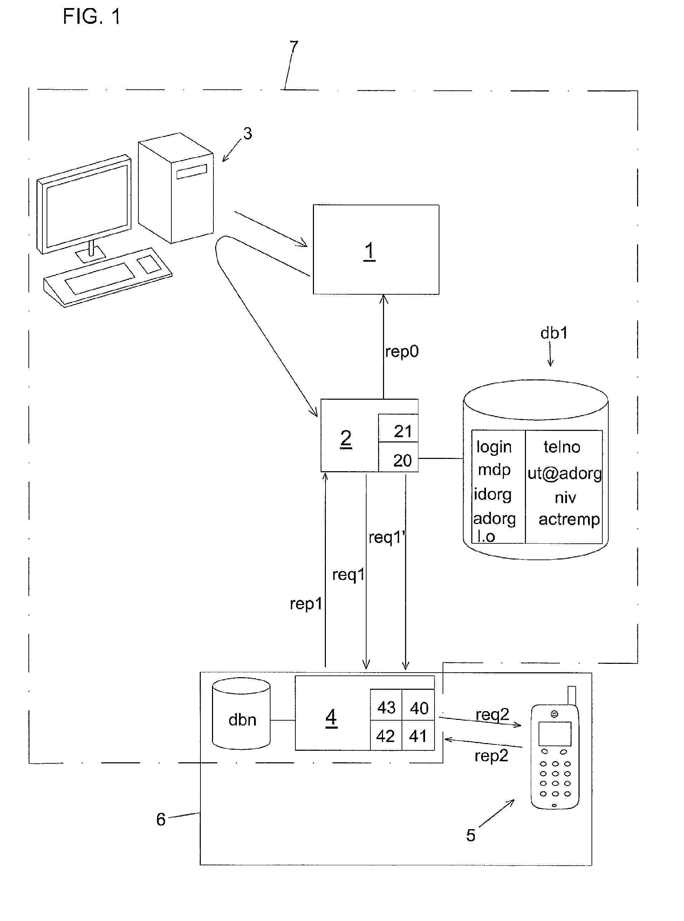

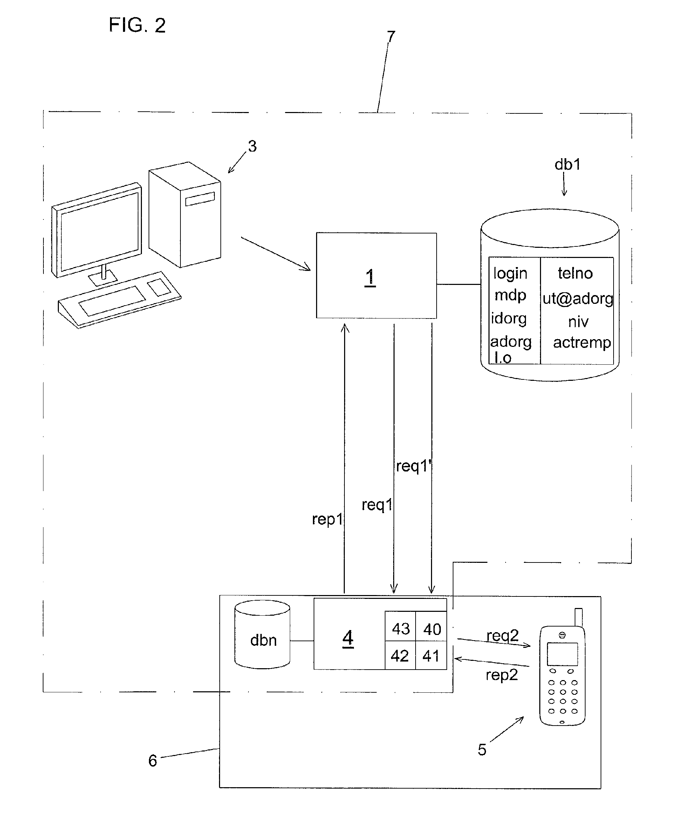

La présente invention va à présent être décrite en liaison avec les figures 1 et 2.

Selon l'invention, il s'agit de pouvoir authentifier un utilisateur souhaitant accéder depuis son terminal (3) informatique à un contenu protégé fourni par un fournisseur (1) de contenus.

Selon l'invention, on entendra par fournisseur (1) de contenus tout serveur ou ensemble de serveurs d'un réseau (7) informatique proposant un ou plusieurs services à un ou plusieurs utilisateurs de terminaux informatiques connectés sur ce réseau (7) informatique.

Un fournisseur (1) de contenus sera par exemple un serveur WEB mettant en ligne sur son site Internet des informations ou contenus sur le réseau Internet accessibles depuis le terminal (3) de chaque utilisateur à l'aide par exemple d'un navigateur Internet.

On entendra par terminal (3) un système informatique standard pouvant se connecter sur un réseau (7) informatique tel que par exemple le réseau Internet ou un réseau de type intranet.

Certains contenus sont protégés par des procédures de contrôle d'accès. Dans le cadre de cette procédure de contrôle, pour accéder à un contenu qui lui est propre, l'utilisateur connecté sur le site doit alors donner une information d'ouverture de session (en anglais "login", ce terme sera utilisé dans la suite de la description) et un mot de passe. Comme déjà décrit ci-dessus, des services proposent de centraliser les procédures d'accès à plusieurs sites. De cette manière, un utilisateur n'a besoin de se faire reconnaître qu'une seule fois en fournissant un profil de signature (en anglais "Single Sign In" ou SSI) auprès de ce service (2) pour accéder à tous les sites pour lesquels il est inscrit, référencés auprès de ce service (2). Ce service (2) se présente par exemple sous la forme d'un site Internet sur lequel l'utilisateur est renvoyé (suivant la flèche en pointillés sur la figure 1) lorsqu'il souhaite accéder à un contenu du fournisseur (1) de contenus. Selon l'invention, les contenus de ce site sont mémorisés sur un serveur du réseau (7) informatique.

Dans la suite de la description, on considérera que le fournisseur (1) de contenus fait appel à un service central (2) de contrôle d'accès. Bien entendu ceci n'est pas toujours le cas et la procédure de contrôle d'accès peut très bien être mise en oeuvre par le fournisseur (1) de contenus lui-même comme représenté sur la figure 2. Dans ce cas, les relations décrites ci-dessous entre le service central (2) de contrôle d'accès et un organisme de confiance (4) devront être envisagées comme pouvant être mises en oeuvre directement entre le fournisseur (1) de contenus et cet organisme de confiance (4). Toutes les tâches effectuées par le service central (2) et tous les moyens du service central (2) devront également être considérées respectivement comme pouvant être effectuées par le fournisseur (1) de contenus si ce dernier ne fait pas appel à un service central (2) de contrôle d'accès et comme appartenant au fournisseur (1) de contenus.

Selon l'invention, les informations relatives au profil des utilisateurs de un ou plusieurs sites référencés auprès du service central (2) de contrôle d'accès sont par exemple stockées dans au moins une base de données (db1) mémorisée dans des moyens (20) de mémorisation du service central (2). Lors d'une première utilisation, toutes ces informations seront par exemple demandées à l'utilisateur afin de pouvoir être enregistrées dans la base de données (db1). Ces informations sont par exemple son nom ou login (login), un mot de passe (mdp), le nom (idorg) et l'adresse (adorg) d'un organisme (4) envers lequel il a confiance tel que par exemple son opérateur de téléphone mobile, son numéro de téléphone mobile (telno) ou son adresse (ut@adorg) ou identification Internet auprès de cet organisme de confiance (4) et d'autres informations dont la nature est précisée ci-après. Ces autres informations concernent par exemple le niveau de sécurité (niv) que l'utilisateur souhaite mettre en place pour accéder à ce contenu. En fonction de l'importance des données du contenu sécurisé, l'utilisateur pourra souhaiter un niveau (niv) de sécurité plus ou moins élevé. Par exemple lors de l'accès à ses comptes bancaires, l'utilisateur pourra souhaiter le niveau (niv) de sécurité le plus élevé. Ce niveau (niv) de sécurité le plus élevé correspondra par exemple à une procédure d'authentification utilisant le téléphone mobile (5) de l'utilisateur. L'utilisateur pourra également définir des actions de remplacement (actremp) lorsque le niveau (niv) de sécurité souhaité n'est pas atteint.

Si l'utilisateur est déjà enregistré, à chaque procédure de contrôle d'accès auprès du service central (2), l'utilisateur donnera uniquement les informations nécessaires pour se faire reconnaître et pour retrouver dans la base de données (db1) les informations correspondant à son profil. L'utilisateur se déclare éventuellement via une procédure de type nom ou login (login) et mot de passe (mdp) afin d'initialiser une procédure de contrôle d'accès conformément à l'invention. A partir de ces informations, une simple lecture de la base de données (db1) par un module de lecture permettra de retrouver l'enregistrement correspondant. La saisie du mot de passe (mdp) n'est pas nécessaire à chaque déclaration, un simple "cookie" pouvant permettre de mémoriser le mot de passe lorsqu'il a été saisi une fois et de l'afficher à chaque fois que le nom ou le login correspondant à ce mot de passe est saisi.

L'organisme de confiance (4) déterminé par l'utilisateur est constitué de un ou plusieurs serveurs du réseau (7) informatique. Il s'agit d'un organisme connu de l'utilisateur et choisi par l'utilisateur à la différence du service central (2) de contrôle d'accès qui lui est choisi par le fournisseur (1) de contenus. Cet organisme de confiance (4) choisi par l'utilisateur sera par exemple l'opérateur de son téléphone mobile (5). Le service central (2) de contrôle d'accès pourra par exemple mémoriser dans une base de données (db1) des informations d'identification des différents opérateurs de téléphonie mobile existants dans chaque pays du monde et acceptant de travailler avec le service central (2) pour effectuer des procédures d'authentification. Le service central (2) pourra ainsi proposer directement à l'utilisateur une liste pré-composée de ces opérateurs (I.o) enregistrés dans la base de données (db1). Dans une variante, l'utilisateur pourra lui-même donner toutes les informations indispensables à la reconnaissance de son opérateur de téléphonie mobile (5). Les informations de reconnaissance de l'opérateur seront par exemple son nom (idorg) et son adresse (adorg) permettant de l'identifier sur le réseau (7) informatique telle que par exemple une adresse URL. Sur les figures 1 et 2, l'organisme de confiance (4) est représenté comme appartenant à la fois au réseau (7) informatique et au réseau (6) de communication avec le téléphone mobile (5) ceci du fait qu'il est capable d'établir une communication avec les autres serveurs du réseau (7) informatique via ce réseau et avec le téléphone mobile (5) via un réseau (6) de communication sans fil tel que par exemple un réseau de radiotéléphonie.

Selon l'invention, les informations relatives au profil de chaque utilisateur peuvent comprendre par exemple des informations relatives à la procédure d'authentification dont il souhaite disposer pour accéder au contenu sécurisé. Selon l'invention, comme décrit ci-dessus, pour disposer du niveau de sécurité le plus élevé, l'utilisateur pourra choisir de se faire authentifier à partir de son téléphone mobile (5).

Lors de la mise en oeuvre de la procédure de contrôle d'accès, le service central (2) de contrôle d'accès construit au moins une requête (req1) à partir des informations recueillies sur l'utilisateur dans la base de données (db1). Cette requête (req1) est une demande d'authentification que le service central (2) envoie à l'organisme de confiance (4) de l'utilisateur, par exemple son opérateur de téléphonie mobile, identifié par son adresse (adorg) sur le réseau (7) informatique. La requête (req1) comporte par exemple des données représentatives des informations extraites de la base de données (db1) telles que le nom ou login (login) de l'utilisateur, le numéro (telno) du téléphone mobile (5) accessible à l'utilisateur ou l'adresse (ut@adorg) de l'utilisateur permettant de l'identifier chez son opérateur de téléphonie mobile ainsi que des informations permettant l'identification de l'émetteur des données, c'est-à-dire le service central (2), et des données représentatives du niveau (niv) de sécurité demandé. Afin de pouvoir certifier leur provenance, les données à envoyer relatives à l'utilisateur sont par exemple préalablement cryptées par un module (21) de cryptage/décryptage, par exemple par cryptage asymétrique à clé publique et clé privée.

L'organisme de confiance (4) comporte un module (40) émetteur/récepteur pour l'émission et la réception des données. L'organisme de confiance (4) effectue à la réception des données une identification de l'émetteur et éventuellement un décryptage par un module (42) de cryptage/décryptage des données reçues grâce à la clé publique de l'émetteur. L'organisme de confiance (4) vérifie d'abord que le service central (2) ayant émis les données est référencé auprès de lui et donc qu'il peut lui faire confiance. Le décryptage des données permet ensuite de certifier la provenance de ces données. L'organisme de confiance (4) peut avoir à effectuer également, grâce à un module (43) de recherche, une recherche dans une de ses bases de données (dbn) de l'adresse (ut@adorg) de l'utilisateur, l'identifiant auprès de lui, correspondant au numéro (telno) de téléphone mobile qui lui a été envoyé.

L'organisme de confiance (4) doit ensuite effectuer la procédure d'authentification de l'utilisateur du terminal (3) suivant le niveau (niv) de sécurité souhaité, c'est-à-dire ici en utilisant le téléphone mobile (5) accessible à l'utilisateur. Cette authentification est réalisée par un module (41) d'authentification pouvant mettre en oeuvre une session d'échange interactif de données, par exemple cryptées, entre l'organisme de confiance (4) et le téléphone mobile (5). Cette session interactive est réalisée à travers un réseau (6) de communication sans-fil entre l'organisme de confiance (4) et le téléphone mobile (5), par exemple à travers un réseau (6) de radiotéléphonie suivant la norme WAP, GPRS ou UMTS.

Le module (41) d'authentification comporte un sous-module de vérification auprès d'un serveur de l'état du téléphone mobile (5), le téléphone mobile (5) pouvant être dans un état connecté ou dans un état non connecté au réseau (6) de communication. Un autre sous-module permet de prendre connaissance auprès du même serveur ou d'un serveur différent de la norme sous laquelle le téléphone mobile (5) de l'utilisateur fonctionne. Il pourra s'agir de l'une des normes décrites ci-dessus ou d'une autre norme telle que par exemple la norme GSM.

Dans le premier cas, c'est-à-dire si le téléphone mobile (5) est dans un état connecté et fonctionne suivant l'une des normes WAP, GPRS ou UMTS, l'organisme de confiance envoie au téléphone mobile (5), identifié sur le réseau (6) de communication par son numéro de téléphone (telno) ou par son adresse (ut@adorg), une requête (req2) comportant des données cryptées à travers au moins un canal du réseau (6) de communication approprié au téléphone mobile (5) récepteur. Les données de cette requête (req2) sont décryptées par un module de cryptage/décryptage du téléphone mobile (5). Cette requête (req2) est une demande à l'utilisateur de confirmer des informations ou de lui communiquer des informations confidentielles telles que par exemple un mot de passe afin de pouvoir lui laisser l'accès au contenu sécurisé du fournisseur (1) de contenus. L'utilisateur pourra également communiquer le temps qu'il souhaite rester sur le contenu sécurisé.

Dans le deuxième cas, c'est-à-dire si le téléphone mobile (5) accessible à l'utilisateur est dans un état connecté mais qu'il ne fonctionne pas suivant l'une des normes citées, des actions (actremp) de remplacement suivant une procédure d'authentification correspondant à un niveau de sécurité inférieur à celui souhaité sont mises en place. Ces actions de remplacement (actremp) peuvent être définies par l'utilisateur et avoir été communiquées avec les données de la requête (req1) par le serveur central (2) à l'organisme de confiance (4). Elles peuvent consister par exemple en l'envoi d'un message SMS (Short Message Service) vers le téléphone mobile (5). Si le téléphone mobile (5) est en plus dans un état déconnecté, ces actions consisteront alors par exemple pour l'organisme de confiance (4) à effectuer une recherche sur le numéro de téléphone (telno) qui lui a été envoyé afin de savoir si celui-ci est bien référencé dans une de ses bases de données (dbn) et correspond bien au nom ou login (login) de l'utilisateur.

Selon une variante de réalisation, si le téléphone mobile (5) est dans un état déconnecté et/ou ne fonctionne pas suivant l'une des normes d'échange interactif de données, ce qui signifie que le niveau de sécurité optimal souhaité ne va pas pouvoir être atteint, l'organisme de confiance (4) envoie une réponse au service central (2) comportant des données représentatives de ce résultat. Le service central (2) décide alors en fonction de cette réponse, en consultant la base de données (db1), des actions de remplacement (actremp) à mettre en place conformément à un niveau de sécurité inférieur. Une nouvelle requête (req1') est alors envoyée par le service central (2) à l'organisme de confiance (4) lui demandant de mettre en place ces actions de remplacement (actremp), consistant par exemple en l'envoi d'un message court de type SMS sur le téléphone mobile (5).

En réponse à la requête req2, des données (rep2) cryptées sont envoyées par un module d'envoi du terminal mobile (5) au module (40) récepteur de l'organisme de confiance (4). Ces données seront représentatives d'une réponse de l'utilisateur ou d'une absence de réponse. Cette absence de réponse a lieu par exemple dans le cas où l'utilisateur n'a pas souhaité s'authentifier, dans le cas où son terminal mobile (5) n'était plus dans un état connecté au réseau (6) de communication ou dans le cas où la session d'échange de données a été interrompue. L'organisme de confiance (4) envoie ensuite au service central (2) le résultat (rep1) de la procédure d'authentification. Si la procédure d'authentification s'est bien déroulée, le service central (2) informe alors le fournisseur (1) de contenus en envoyant une réponse (rep0) indiquant que l'utilisateur peut accéder au contenu sécurisé. En revanche si la procédure d'authentification ne s'est pas déroulée conformément au niveau (niv) de sécurité souhaité ou s'est déroulé suivant le niveau de sécurité inférieur déterminé comme selon la variante décrite ci-dessus, la réponse (rep1) envoyée au service central (2) comprend le résultat de la procédure mise en place conformément au niveau de sécurité inférieur. En fonction de cette réponse et du niveau de sécurité atteint, le service central (2) commande également la mise en place d'autres actions de remplacement (actremp) appropriées. Ces actions de remplacement (actremp) sont par exemple prédéfinies par l'utilisateur et mémorisées dans la base de données (db1). Ces actions de remplacement (actremp) sont mises en place par exemple au niveau du fournisseur (1) de contenus. Ces actions peuvent consister par exemple à rendre le contenu ou une partie de celui-ci accessible uniquement en mode lecture, à laisser l'accès à une partie du contenu uniquement, à ne rendre actives que certaines fonctions, par exemple lorsqu'il s'agit d'un compte bancaire, en autorisant uniquement les virements entre deux comptes de l'utilisateur et en interdisant les virements vers des comptes étrangers à ceux de l'utilisateur.

Selon l'invention, au cours d'une même session entre le téléphone mobile (5) et l'organisme de confiance (4), l'utilisateur peut être amené à valider plusieurs requêtes intermédiaires lors de la procédure de contrôle d'accès à un contenu. Tant que la session est en cours, l'organisme de confiance (4) commandé par le service central (2) ou le fournisseur (1) de contenus peut donc à tout moment envoyer des requêtes ou des informations sur le téléphone mobile (5) de l'utilisateur.

Selon l'invention, la fin de la session entre le téléphone mobile (5) et l'organisme de confiance (4) peut être commandée à tout instant par l'utilisateur depuis le téléphone mobile (5). Cette fin de session met alors un terme à la procédure de contrôle d'accès au contenu en cours, entraînant par exemple l'arrêt de l'accès aux différents services de contenus par l'utilisateur.

Selon l'invention, le téléphone mobile (5) pourra être remplacé par tout terminal mobile connu fonctionnant suivant des normes standards d'échange interactif de données telles que par exemple celles citées ci-dessus. Le terminal mobile pourra donc être par exemple un assistant personnel de gestion ou PDA ("Personal Digital Assistant"), un téléphone satellite,...

Selon l'invention, comme décrit ci-dessus et en référence à la figure 2, la procédure de contrôle d'accès peut être mise en oeuvre et commandée directement par le fournisseur (1) de contenus qui est alors en communication directe avec l'organisme de confiance (4).

L'invention est donc parfaitement sûre en ce qu'elle présente notamment l'avantage qu'aucun mot de passe ne transite sur l'Internet. De plus, selon l'invention, chaque entité du système est connue d'une ou plusieurs autres entités. En effet, le service central (2) s'il en existe un est connu du fournisseur (1) de contenus, l'organisme de confiance (4) est choisi par l'utilisateur donc connu de celui-ci, l'organisme de confiance (4) connaît le service central (2) s'il en existe un, le téléphone mobile (5) est connu de l'organisme de confiance (4),... Le cryptage des données permet également de certifier la provenance des données échangées. Selon l'invention, aucune prise de contrôle n'est effectuée par le service central (2) de contrôle d'accès puisque l'utilisateur choisit de traiter avec son organisme de confiance (4).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de contrôle d'accès à un contenu, d'un utilisateur d'un terminal (3) connecté à travers un réseau (7) informatique à au moins un serveur d'un fournisseur (1) de contenus, **caractérisé en ce qu'**il comprend une étape d'échange interactif de données à travers un réseau (6) de communication sans-fil entre un organisme de confiance (4) du réseau (7) informatique, déterminé ou accepté par l'utilisateur, et un terminal mobile (5) accessible à l'utilisateur.

2. Procédé selon la revendication 1, **caractérisé en ce que** l'étape d'échange de données comporte une étape d'envoi vers le terminal mobile (5), par l'organisme de confiance, d'une requête (req2) demandant à l'utilisateur de confirmer ou d'envoyer des données d'authentification depuis le terminal mobile (5).

3. Procédé selon la revendication 1 ou 2, **caractérisé en ce qu'**il comprend une étape de contrôle de la disponibilité du terminal mobile (5) et une étape de détermination de la norme de communication suivie par le terminal mobile.

4. Procédé selon l'une des revendications 1 à 3, **caractérisé en ce qu'**il comprend une étape de détermination, par un agent serveur (2) du réseau (7) informatique, référencé comme de confiance pour le fournisseur (1) de contenu, ou par le fournisseur (1) de contenu lui-même, de données d'identification relatives à l'utilisateur soit par lecture d'au moins une base de données (db1) soit par envoi sur le terminal (3) de l'utilisateur d'une demande de définition de ces données d'identification.

5. Procédé selon la revendication 4, **caractérisé en ce qu'**il comprend une étape d'envoi à l'organisme de confiance (4), par l'agent serveur (2) ou par le fournisseur (1) de contenu, d'une requête (req1) comportant des données d'identification de l'utilisateur.

6. Procédé selon la revendication 5, **caractérisé en ce qu'**il comprend une étape de cryptage des données d'identification à envoyer à l'organisme de confiance (4).

7. Procédé selon la revendication 5 ou 6, **caractérisé en ce qu'**il comprend une étape de vérification par l'organisme de confiance (5) de la provenance de la requête.

8. Procédé selon l'une des revendications 4 à 7, **caractérisé en ce qu'**il comprend une étape d'envoi, de l'organisme de confiance (4) à l'agent serveur (2) ou au fournisseur (1) de contenus, d'une réponse déterminée comprenant notamment un niveau de sécurité atteint ou pouvant être atteint lors d'une procédure de contrôle d'accès respectivement effectuée ou à effectuer.

9. Procédé selon la revendication 8, **caractérisé en ce qu'**il comprend une étape de réaction de l'agent serveur (2) ou du fournisseur (1) de contenus en fonction de la réponse envoyée par l'organisme de confiance (4), cette réaction comprenant la mise en place d'actions de remplacement (actremp) si le niveau de sécurité (niv) souhaité par l'utilisateur pour l'accès au contenu n'a pas été ou ne peut être atteint.

10. Procédé selon l'une des revendications 4 à 9, **caractérisé en ce qu'**il comprend une étape d'envoi à l'organisme de confiance (4), par l'agent serveur (2) ou le fournisseur (1) de contenus, de données représentatives d'un niveau (niv) de sécurité souhaité par l'utilisateur pour l'accès au contenu et une étape de mise en place de la procédure de contrôle d'accès définie pour ce niveau de sécurité.

11. Procédé selon l'une des revendications 4 à 10, **caractérisé en ce que** les données d'identification, comprenant le nom (idorg) et l'adresse (adorg) de l'organisme de confiance (4), un identifiant (ut@adorg) de l'utilisateur auprès de l'organisme de confiance (4), le niveau (niv) de sécurité souhaité par l'utilisateur pour le contenu à accéder ainsi que les actions de remplacement (actremp) à mettre en oeuvre, sont saisis préalablement par l'utilisateur sur au moins une feuille gérée par l'agent serveur (2) ou le fournisseur (1) de contenus.

12. Procédé selon l'une des revendications 1 à 11, **caractérisé en ce qu'**il comprend une étape de commande de la fin de la session d'accès au contenu souhaité mise en oeuvre depuis le terminal mobile (5).

13. Procédé selon l'une des revendications 1 à 12, **caractérisé en ce que** la communication entre l'organisme de confiance (4) et le terminal mobile (5) est réalisée à travers un réseau (6) de radiotéléphonie.

14. Procédé selon la revendication 13, **caractérisé en ce que** le réseau (6) de radiotéléphonie fonctionne suivant la norme WAP, GPRS ou UMTS.

15. Système pour le contrôle d'accès à un contenu, d'un utilisateur d'un terminal (3) connecté à travers un réseau (7) informatique à au moins un serveur d'un fournisseur (1) de contenus, **caractérisé en ce qu'**il comprend des moyens d'échange interactif de données à travers un réseau (6) de communication sans-fil entre un organisme de confiance (4) du réseau (7) informatique, déterminé ou accepté par l'utilisateur, et un terminal mobile (5) accessible à l'utilisateur.

16. Système selon la revendication 15, **caractérisé en ce que** les moyens d'échange de données comprennent des moyens d'envoi sécurisé par l'organisme de confiance (4) vers le terminal mobile (5) d'au moins une requête (req2) demandant à l'utilisateur de confirmer des données d'authentification ou d'envoyer des données d'authentification depuis le terminal mobile (5).

17. Système selon la revendication 15 ou 16, **caractérisé en ce qu'**il comprend des moyens (20) de mémorisation mémorisant des données d'identification relatives à l'utilisateur dans au moins une base de données (db1) localisée sur un agent serveur (2) du réseau (7) informatique, référencé comme de confiance pour le fournisseur (1) de contenus, ou sur le fournisseur (1) de contenus.

18. Système selon la revendication 17, **caractérisé en ce que** ces données d'identification comprennent notamment le nom (idorg) et l'adresse (adorg) de l'organisme de confiance (4) de l'utilisateur ainsi qu'un identifiant (ut@adorg) de l'utilisateur auprès de l'organisme de confiance (4).

19. Système selon la revendication 17 ou 18, **caractérisé en ce que** les moyens (20) de mémorisation mémorisent dans au moins une base de données (db1), des données représentatives d'un niveau (niv) de sécurité défini par l'utilisateur pour l'accession au contenu et des actions de remplacement (actremp) à mettre en oeuvre si ce niveau n'est pas atteint ou ne peut être atteint.

20. Système selon la revendication 19, **caractérisé en ce que** ces actions de remplacement (actremp) sont l'accès à une partie du contenu uniquement, l'accès au contenu ou à une partie de celui-ci en mode lecture uniquement ou l'envoi d'un message au terminal mobile (5) par l'organisme de confiance (4).

21. Système selon l'une des revendications 15 à 20, **caractérisé en ce que** l'organisme de confiance (4) comprend des moyens de contrôle de la disponibilité du terminal mobile (5) de l'utilisateur et de la norme de communication suivie par le téléphone mobile (5).

22. Système selon la revendication 21, **caractérisé en ce qu'**il comprend des moyens d'activation d'actions de remplacement (actremp) représentant une procédure d'authentification d'un niveau de sécurité inférieur si le terminal mobile (5) n'est pas disponible et/ou ne fonctionne pas suivant une norme appropriée.

23. Système selon l'une des revendications 19 à 22, **caractérisé en ce que** l'organisme de confiance (4) comprend des moyens de génération et d'envoi d'une réponse à l'agent serveur (2) ou au fournisseur (1) de contenus, cette réponse comportant des données représentatives du niveau de sécurité atteint ou pouvant être atteint.

24. Système selon la revendication 23, **caractérisé en ce que** l'agent serveur (2) ou le fournisseur (1) de contenus comprend des moyens de traitement de la réponse (rep1) reçue de l'organisme de confiance (4) ainsi que des moyens d'activation d'une ou plusieurs actions de remplacement (actremp) si le niveau (niv) de sécurité souhaité n'a pas été atteint ou ne peut être atteint.

25. Système selon l'une des revendications 19 à 24, **caractérisé en ce que** l'agent serveur ou le fournisseur de contenu comporte des moyens de lecture de la ou des bases de données (db1) pour déterminer les données d'identification relatives à l'utilisateur et les actions de remplacement (actremp) lorsque le niveau de sécurité n'est pas atteint.

26. Système selon l'une des revendications 17 à 25, **caractérisé en ce qu'**il comprend des moyens de saisie par l'utilisateur, sur au moins une feuille gérée par l'agent serveur (2) ou par le fournisseur (1) de contenus, des données d'identification de l'utilisateur, du niveau (niv) de sécurité souhaité par l'utilisateur ainsi que des actions de remplacement (actremp) à mettre en oeuvre si ce niveau n'est pas atteint.

27. Système selon l'une des revendications 15 à 26, **caractérisé en ce que** le réseau (6) de communication entre l'organisme de confiance (4) et le terminal mobile (5) est un réseau (6) de radiotéléphonie.

28. Système selon la revendication 27, **caractérisé en ce que** le réseau (6) de radiotéléphonie fonctionne suivant la norme WAP, GPRS ou UMTS.
